# EUROPEAN PATENT SPECIFICATION

(11) **EP 0 507 455 B1**
(45) Date of publication and mention of the grant of the patent: **02.01.1997**
(21) Application number: 92301928.5
(22) Date of filing: 06.03.1992
(51) Int. Cl.: F25D 25/02

(54) **Moulded refrigerator shelf**
Abgeformtes Regal für Kühlschrank
Etagère moulée pour réfrigérateur

(30) Priority: 07.03.1991 US 665661
(43) Date of publication of application: 07.10.1992
(73) Proprietor: Gemtron Corporation, Sweetwater, Tennessee 37874 (US)
(72) Inventor: Bird, Kevin C., Holland, Michigan 49424 (US); Gilbert, Donald C., Muskegon Heights, Michigan 49444 (US); Herrmann, Robert S., Grand Haven, Michigan 49417 (US); Wolters, Gregory T., Holland, Michigan 49423 (US); Morgan, Cleon Clayton, Holland, Michigan 49423 (US)
(74) Representative: Sheard, Andrew Gregory

(56) References cited:
- DE-U- 9 004 180
- DE-U- 9 006 513
- US-A- 2 517 725
- US-A- 3 224 081
- US-A- 3 331 646
- US-A- 3 633 983

## Description

This invention relates to a shelf suitable for use in a refrigerated compartment, as defined in the preamble of claim 1. Such a shelf is known, for example, from DE-U-90 06 513.

As is the nature of articles containing liquids which are stored in a refrigerator or freezer, many such articles are spillable and do spill. Such a spill will typically soak into other items or contaminate other foods in the refrigerated compartment. Extensive clean up efforts are required since the spill will commonly flow down through the compartment from shelf to shelf. Therefore, it is desirable to provide containment measures for limiting the area of such a spill. One such method is a spill resistant shelf, having the purpose of containing a spill to the shelf upon which the spill occurred and precluding the downward flow of the spill through the compartment.

One such spill resistant shelf is disclosed in US-A-4,934,541 (issued on June 19, 1990 to Bussan *et al*). Here a refrigerator shelf is disclosed having a two-piece plastic "picture frame" circumscribing the periphery of a glass plate to provide a spill resistant refrigerator shelf. For liquid spill resistance, a silicone seal should be provided between the upper frame member and the glass plate.

In US-A-3,633,983 (issued on January 11, 1972 to Whitcomb) the use of a glass shelf member which is framed by spaced parallel side potions, an interconnecting rear portion and a transversely extending portion across the front of the glass is disclosed. The framing front, side and rear portions are specified as being extruded material and having a glass receiving groove for receiving the glass shelf member. However, a liquid tight seal around the perimeter edge of the glass is not provided or suggested. A spill on the shelf, particularly of a liquid, will seep between the glass and the supporting frame and flow down through the compartment.

The above-mentioned German Utility Patent G9006513.1 relates to a household refrigerator having cleats in its internal walls for receiving removable supporting shelves. The shelves are fashioned as glass plates and bordered by a continuous frame upon which the shelf is supported between the cleats in the refrigerator wall. The frame can be made, for example, by circummoulding the glass plate with plastic.

Another problem common to these shelf structures still remains. That is, items which are spilled upon such shelves can seep between the glass plate shelf member and the surrounding frame members where it is virtually impossible to remove or otherwise clean. Thus and in spite of the sanitary benefits of using glass, an unsanitary condition can easily develop as food stuffs become trapped between the shelf members and frame members.

Another consideration in designing shelf structures for a refrigerated compartment is the circulation or convection of air through the compartment. It is desirable to provide for some means of circulation in order to maintain a homogeneous temperature distributions and avoid stratification, where a range of temperature zones are created in the compartment with the coldest zone at the bottom and the warmest zone at the top.

Therefore, one will typically design the shelf structure to include passage spaces at either side of a shelf as well as behind the shelf. This carries with it an inherent deficiency in that it decreases the shelf surface area by the amount of space allowed at either side of and behind the shelf. Further, in situations where a framing structure circumscribes the shelf, such as those already discussed the width of the frame further reduces the available shelf area.

The present invention is characterised in that the rim is moulded around at least a portion of the support to secure the shelf panel and the support means together.

Usually the rim will be formed during moulding and may prevent collection and spillage of liquids between the shelf member and rim. Preferably the shelf member will comprise tempered glass.

Suitably a primer layer is applied to the shelf member which may enhance the provision of the liquid tight seal. This primer layer is suitably applied to the shelf member, between the shelf member and the rim. Suitably the layer will be applied to portions of the shelf member that is near the perimeter edge. Preferably the primer layer is a heat activatable resinous material.

Suitably the rim will project above the top surface to thereby define a spill dam. This may enable any liquid disposed upon the top surface to be contained by the rim. Thus this may prevent any liquid flowing around or over the edge of the shelf panel.

Suitably the rim is moulded around at least a portion of the support means. This may enable the shelf member and the support means to be secured together by the rim.

Preferably the support means will comprise at least one bracket cantilevered from a wall of a refrigerated compartment. This may provide air flow space around the periphery of the shelf. Suitably the bracket will be adapted to be removably connected to the wall, while correspondingly the wall can be adapted for removably receiving the bracket. Suitably this will be at a plurality of vertically spaced apart positions so that the shelf can be located at a plurality of vertical positions, as desired.

The shelf member will usually have first and second sides, these sides being opposite from each other. The support means can include a first and second bracket, the first bracket being connected by a slide means to the first side, the second bracket being connected by the side means to the second side. The brackets are preferably adapted to cantilever the shelf member from the wall of the refrigerated compartment and to enable them to be removably connected to the wall.

Suitably the support means will allow the shelf to be supported at a plurality of vertical locations. This may be achieved by providing a wall which is adapted to removably receive the brackets at a plurality of vertically spaced positions.

The shelf member may have a bottom surface and at least one cross-brace may be provided that is connected between the first and second brackets.

Accordingly, the present invention provides a refrigerator shelf having a moulded, perimeter, spill resistant rim. The moulded rim may both maximise the spill retention capability of the shelf and minimise the potential for inaccessible entrapment of a spilled material between the perimeter rim and the shelf panel. In one preferred embodiment of the invention, the perimeter rim is moulded around at least a portion of one or more supporting shelf brackets, assuring a secure and durable attachment between the shelf panel and the support brackets.

Tempered glass is preferably used as the shelf member in order to enhance light distribution through the refrigerated compartment and to enhance viewing of items supported by the shelving. The sides and back of the shelf can be spaced from the walls of the refrigerated compartment so as to provide proper circulation around the shelf; the use of the moulded perimeter rim may allow the formation of a narrow perimeter rim to maximise the support area of the shelf.

The present invention thus seeks to provide a durable support rim for a spill proof refrigerator shelf. The moulded perimeter rim can maximise the sealing contact between the rim and the shelf member for enhanced spill prevention and to minimise the potential for entrapment of foodstuffs between the perimeter rim and the shelf member and the subsequent development of an unsanitary condition. Furthermore, the moulded rim of the present invention may offer enhanced aesthetics by minimising seams and joints in the rim to give a more streamlined appearance.

Suitably the shelf member will comprise a light transmitting material, such as tempered glass. Preferably the bracket member is adapted to be cantilevered from a wall of a refrigerated compartment. The bracket may be removably connected to the refrigerator wall to thereby provide air flow space around the periphery of the shelf. The wall can then be adapted to removably receive the bracket at a plurality of vertically spaced positions. This may enable the bracket and shelf to be cantilevered from the wall at a plurality of vertical positions.

The present invention extends to a refrigerator or freezer that is provided with a shelf as defined above.

Also according to the present invention there is provided a method of assembling a shelf as defined above which is characterised by making the rim as a one-piece member of mouldable material and forming a liquid tight seal between the shelf panel and the rim by contact between them.

The invention will now be described by way of example with reference to the accompanying drawings which are provided by way of illustration, and are not to be construed as limiting, and in which:
Fig. 1 is a fragmentary perspective view of an interior of refrigerator having a shelf according to the present invention;
Fig. 2 is a fragmentary perspective view of an interior of a refrigerator having a sliding shelf not within the scope of the present invention;
Fig. 3 is a fragmentary section along line III-III of a front edge of the shelf of Fig. 1;
Fig. 4 is a fragmentary section along line IV-IV of a front edge of the shelf of Fig. 2;
Fig. 5 is a fragmentary section along line V-V of a side edge of the shelf of Fig. 1;
Fig. 6 is a fragmentary section along line VI-VI of a side edge of the shelf of Fig. 2;
Fig. 7 is a fragmentary section along line VII-VII of the rear edge of the shelf of Fig. 1;
Fig. 8 is a fragmentary section along line VIII-VIII of a rear edge of the shelf of Fig. 2;
Fig. 9 is a fragmentary side elevation of a rear end of a support bracket that can be used with the shelf of Fig. 1;
Fig. 10 is a partially fragmentary perspective view of the shelf of Fig. 2 in a partially extended position and having a first example of a shelf stop;
Fig. 11 is a fragmentary section along line XI-XI of the shelf stop of the shelf of Fig. 10;
Fig. 12 is a fragmentary rear elevation of the shelf stop of Fig. 11;
Fig. 13 is a fragmentary section along line XIII-XIII of the shelf stop of Fig. 11;
Fig. 14 is a fragmentary side elevation of the shelf of Fig. 2 having a second, alternative example of a shelf stop;
Fig. 15 is a fragmentary section along line XV-XV is the shelf of Fig. 14;
Fig. 16 is a fragmentary side elevation of the shelf of Fig. 2 having a third example of a shelf stop;
Fig. 17 is a fragmentary section along line XVII-XVII of Fig. 16;
Fig. 18 is a fragmentary side elevation of the shelf of Fig. 2 having a fourth example of a shelf stop;
Fig. 19 is a fragmentary section along line XIX-XIX of Fig. 18;
Fig. 20 is a fragmentary section along line XX-XX of Fig 19;
Fig. 21 is a fragmentary side elevation of the shelf of Fig. 2 having a fifth example of a shelf stop;
Fig. 22 is a fragmentary section along line XXII-XXII of Fig. 21;
Fig. 23 is a fragmentary section along section line XXIII-XXIII of Fig. 22;
Fig. 24 is a fragmentary side elevation of the shelf of Fig. 2 having a sixth example of a shelf stop;
Fig. 25 is a fragmentary section along line XXV-XXV of Fig. 24; and
Fig. 26 is a fragmentary section along line XXVI-XXVI of Fig. 25.

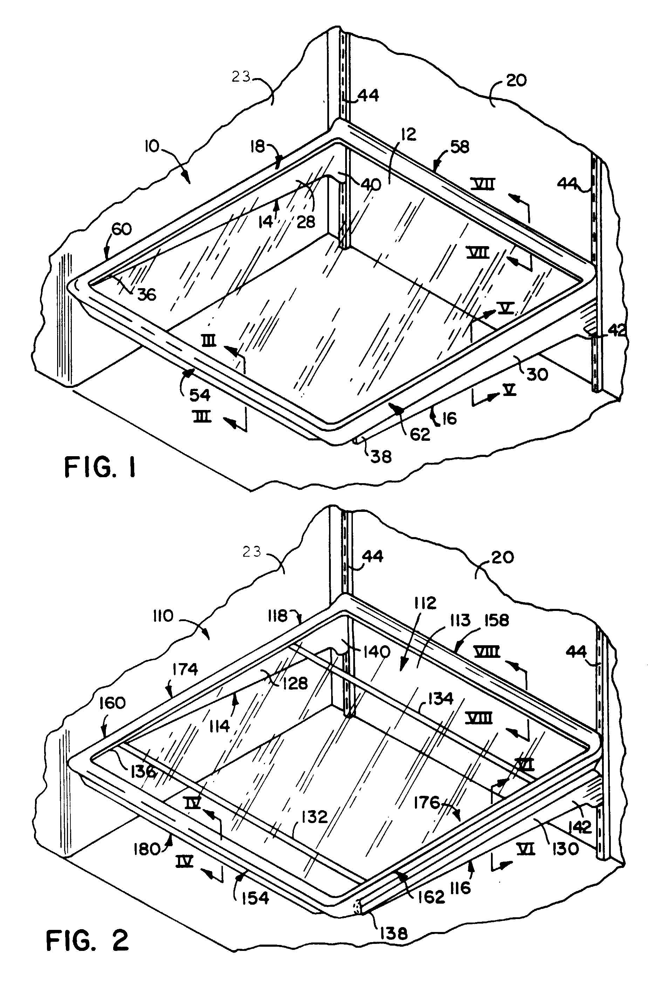

Referring now to the drawings in greater detail and Fig. 1 in particular, a refrigerator shelf assembly 10 comprises a generally planar shelf member 12, metal support brackets 14 and 16 and a moulded, resinous perimeter rim 18. Shelf assembly 10 is preferably cantilevered forward by brackets 14 and 16 from a rear wall 20 of a refrigerator.

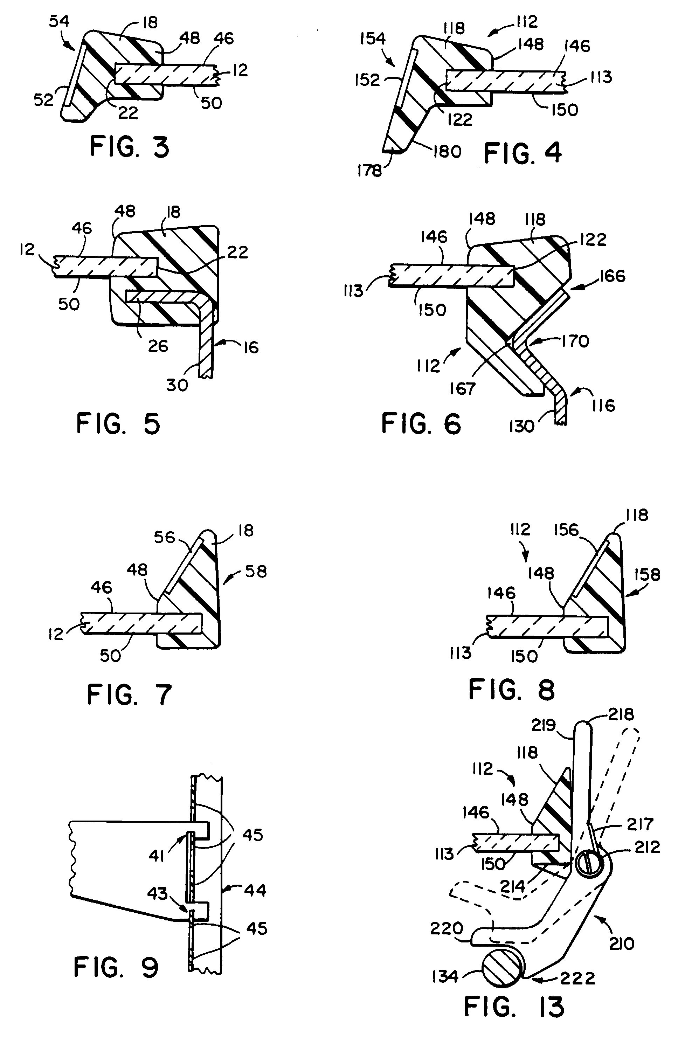

Shelf member 12 may be a light transmitting material, preferably optically clear tempered glass, to enhance light distribution through the refrigerated compartment. Shelf member 12 has a perimeter edge 22 (Figs. 3 and 5) which is supported above brackets 14 and 16 and positioned to overlap above inwardly projecting flange portions 26 of the brackets. Flange portions 26 project inwardly toward each other at the top edge of generally vertical web positions 30 of each bracket 14 and 16. Thus, the brackets 14 and 16 are mirror image replicas of each other.

While shelf assembly 10 may be used as a fixed shelf, it is preferably used as a vertically adjustable shelf. Therefore, as shown in Fig. 9, the rear ends 40 and 42 of brackets 14 and 16 are preferably adapted for releasable engagement with shelf tracks 44 provided on the rear wall 20 of the refrigerator. Recesses 41 and 43 function as hooks which engage over rungs 45 in tracks 44 to suspend the brackets. Thus, the shelf assembly 10 may be positioned at a plurality of locations spaced vertically along tracks 44. The shelf assembly 10 is preferably sized to provide air circulation space between side portions 60, 62 and the side walls 23 of the refrigerator to allow circulation around the shelf. Further, the length of the shelf assembly 10 is such as to provide air circulation space between the front edge 54 and the door (not shown) of the refrigerator.

The rim 18 is moulded around the entire perimeter edge 22 of shelf member 12 as well as flanges 24 and 26 of brackets 14 and 16 for tight engagement and connection of shelf member 12 with brackets 14 and 16 (see Fig. 5). During assembly, the shelf member 12 and support brackets 14 and 16 are held and positioned within a mould while a mouldable material, from which rim 18 is made, is injected and flows into the mould around the peripheral edge 22 of shelf member 12 and flange portions 24,26, encapsulating the edge 22 and the flange portions 24,26. The mouldable material of which rim 18 is comprised may include copolymer plastic materials such as a combination of ethylene and polypropylene or other structural, resinous plastic such as ABS or polyvinyl chloride. Further, a colouring pigment added to the mouldable plastic used for moulding rim 18 prior to moulding can provide desired colour(s) to the rim. For example, titanium dioxide may be added for a white colouration.

As the mouldable material cures, i.e., cools, hardens and sets, it becomes a tough and resilient mass that extends continuously around the perimeter edge 22 of shelf member 12 for holding the shelf member 12 in position above the flange portions 24,26 of the support brackets 14 and 16. The inward extension of flanges 24,26 provides a secure, stable support for shelf 12. The rim 18 is moulded to extend above a top surface 46 of the shelf member 12 and is specifically moulded to define a continuous vertical wall 48 near the perimeter edge 22 of shelf member 12 forming a spill dam for containing spills occurring upon the shelf member 12 (see Figs. 3, 5 and 7).

While the seal formed between rim 18 and shelf member 12, by moulding the rim 18 around the shelf member 12, can perform quite satisfactorily, depending on the specific resinous plastic material chosen, one can enhance the seal by coating the perimeter edge 22 and the adjoining top 46 and bottom 50 surfaces of shelf member 12, adjacent the perimeter edge 22, prior to moulding the rim 18 therearound, with a primer layer or coating of a heat activatable, resinous material which promotes and facilitates the adhesion of the rim material to the glass shelf member 12.

As shown in Fig. 3, a decorative trim piece 52 may be moulded into the rim 18 along the front edge 54 of the shelf member 12. Likewise, a decorative trim piece 56 may be moulded into the rim 18 along the rear edge 58 of the shelf member 12 (see Fig. 7).

A slidable shelf assembly 110, not within the scope of the present invention is shown in Fig. 2. This comprises a slidable shelf member 112, metal support brackets 114 and 116, and a moulded, resinous perimeter rim 118. The shelf assembly 110 is also preferably cantilevered forward by brackets 114 and 116 from the rear wall 20 of a refrigerator.

The shelf member 112 comprises a generally planar shelf panel 113 and rim 118. The shelf panel 113 may be a light transmitting material, preferably optically clear tempered glass, to enhance light distribution through the refrigerated compartment. It has a perimeter edge 122 which is encapsulated by perimeter rim 118 (see Fig. 6).

The rim 118 is moulded around the perimeter edge 112 of the shelf panel 113. During assembly, the shelf panel 113 is held in position within a mould while a mouldable material is injected and flows into the mould around the perimeter edge 122. Again, the mouldable material may be a copolymer plastic or other structural plastic. Also, a colouration pigment, as previously discussed, may be added to the plastic used for moulding rim 118. The rim 118 is also moulded to extend above the top surface 146 of the shelf panel 113 and is specifically moulded to define a continuous vertical wall 148 near the perimeter edge 122 of the shelf panel 113 to form a spill dam for containing any spills that may occur on the shelf member 112 (see Figs. 4, 6 and 8).

The seal between rim 118 and shelf panel 113 may be enhanced by coating the perimeter edge 122 and the top 146 and bottom 150 surfaces of shelf panel 113, near the perimeter edge 122, with a primer layer of a heat activatable, resinous material.

A shelf pull 180 is moulded along the front edge 154 of shelf member 112 by extending the lower edge 178 of rim 118 downwardly (see Fig. 4). Furthermore, as also shown in Fig. 4, a decorative trim piece 152 may be moulded into the rim 118 along the front edge 154 of shelf member 112. A decorative trim piece 156 may also be moulded into rim 118 along the rear edge 158 of shelf member 112 (see Fig. 8).

As is best seen in Figs. 2 and 6, a generally V-shaped channel is moulded into the outwardly facing side surface of each side portion 160 and 162 of rim 118 to define slide guides 166. A corresponding, generally V-shaped ridge 167 is formed along the top edges 126 of each support bracket 114 and 116 thereby defining slide rails 170 for sliding engagement with the slide guides.

The support brackets 114 and 116 of the shelf assembly 110 are mirror image replicas of each other, having rear ends 140 and 142 identical to bracket ends 40 and 42 of brackets 14 and 16, and preferably adapted for releasable engagement with shelf tracks 44. The tracks 44 are provided on a rear wall 20 of the refrigerator for vertically adjustable shelf positioning of the shelf assembly 110 along the tracks 44. A pair of cross braces 132,134 connecting between webs 128 and 130 of the support brackets 114 and 116 are provided for holding the support brackets in spaced relation to each other. The brace 132 is connected to each web 128 and 130 near the forward ends 136 and 138 of brackets 114 and 116. The brace 134 is connected to each web 128 and 130 at a position approximately one-third to one-half of the length of brackets 114 and 116 forward of ends 140 and 142. These cross braces 132 and 134 are required to stabilise the support brackets 114 and 116 and to maintain the proper positioning of the front ends 136,138 of the brackets, precluding the front ends from moving apart when a load is applied to the shelf assembly 110. The shelf assembly 110 has one of six different examples 210, 310, 410, 510, 610 and 710 of shelf stops to preclude the inadvertent overextension of the slidable shelf.

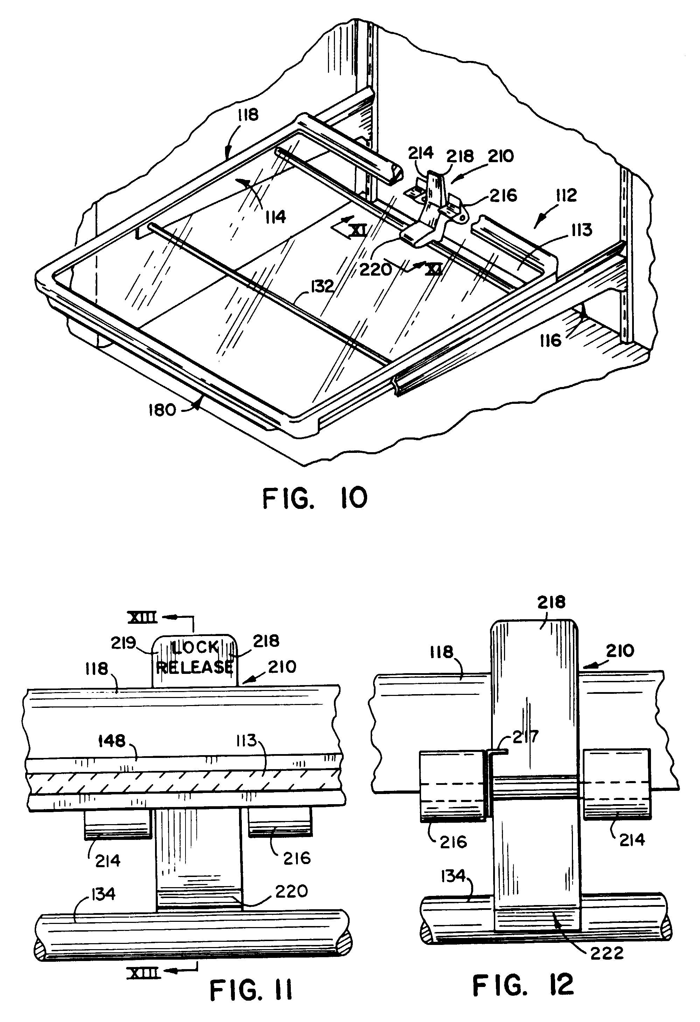

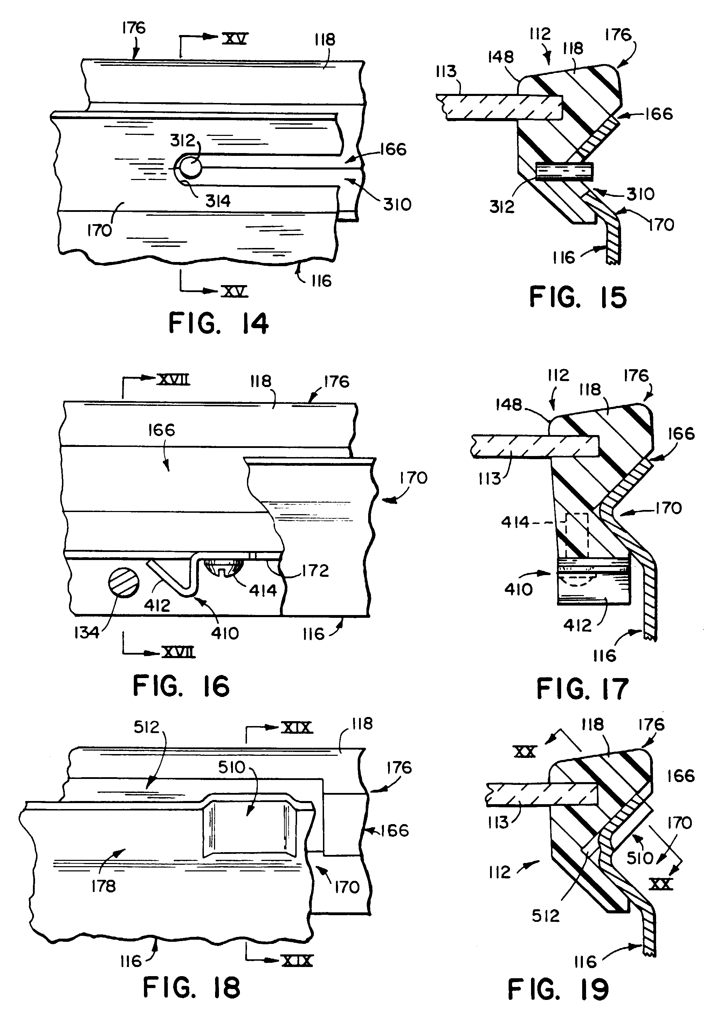

A first example of a shelf stop is shown in Figs. 10 to 13 and comprises a lever 210 mounted on a pivot rod 212 and a pair of pivot rod mounts 214 and 216 projecting downward from the rear edge 158 of the shelf member 112, near the bottom surface 150. The lever 210 has a top end 218 which projects above the perimeter rim 118 for manipulation by a user. The lever 210 also has a lower end 220 defining a catch 222 for engagement with either of cross braces 132 or 134. As the shelf member 112 is slid forward, the catch 222 approaches and engages the brace 134 precluding further extension of the shelf. The relative position of brace 134 thus controls the degree of extension of the shelf member 112 and is preferably approximately one-third to one-half the length of brackets 114 and 116 forward of ends 140 and 142. The shelf stop may be released by sliding the shelf rearward sufficiently to move catch 222 away from brace 134 and by moving the lever 210 to a release positions as shown by the broken lines in Fig. 13. The lever 210 is easily pivoted to the release position by pressing rearwardly on the face 219 of the lever 210 near its top end 218. With the lever in the release position, the catch 222 can slide above and past the brace 134. If the lever 210 is released to pass the brace 134 and allowed to return to its latch position, the catch 222 will engage the other brace 132 as the shelf member 112 is extended. By keeping the lever 210 in the release position, the shelf member 112 can be fully removed. A return spring 217 may be mounted with the lever 210 to bias the lever to the latch position. Alternatively, the lever 210 may be designed so that the force of gravity is sufficient to bias the lever to the latch position.

A second example of a shelf stop is shown in Figs. 14 and 15, and comprises a slot 310 cut into at least one slide rail 168 or 170 and a co-operating stop pin 312 mounted in a fixed position and projecting from perimeter rim 118 at the corresponding slide guide 164 and 166 into the slot 310. The slot 310 has a front end wall 314 and a rear end wall (not shown) to limit the movement of pin 312 and thus also the extension and retraction of shelf assembly 110. The length and position of the slot 310 in combination with the position of the stop pin 312 will dictate the length of extension for shelf member 112, which is preferably in the range of one-third to one-half the length of the shelf support brackets 114 and 116. Use of this shelf stop generally precludes the removal of the shelf member 112 from the support brackets 114 and 116, but does not inhibit the removal of the entire shelf assembly 110 from the refrigerator compartment. Brackets 114 and 116 should be assembled to the shelf member 112 with the stop pins 312 received in the slots 310 before mounting the entire assembly on the tracks 44.

A third example of a shelf stop is shown in Fig. 16 and 17. It comprises a formed metal clip 410 mounted to the bottom surface 172 of the perimeter rim 118 along at least one side portion 174 or 176 of the rim 118. The clip 410 is configured with an inclined front abutting surface 412 for engagement with a cross brace 132 or 134 to limit the extension of the shelf member 112. The relative position of clip 410 will determine the extension of shelf member 112. The clip 410 is preferably bent from a strap of steel or formed from other resilient material so that the clip 410 will deform when forced past the cross brace but will resume it original configuration once it has moved past the cross brace. The clip 410 is preferably removably mounted to the perimeter rim 118 by a screw 414 so that it can be removed rather than requiring that it be forced past the cross brace during assembly and disassembly of the shelf assembly 110. Alternatively, the shelf assembly can be removed from the tracks 44, and disassembled.

A fourth example of a shelf stop is shown in Figs. 18 to 20 which comprises a detent 510 pressed out of the side 178 of at least one of the slide rails 168 or 170 and a corresponding groove or channel 512 cut or moulded into the side of the corresponding slide guide 164 and 166. The relative position of detent 510 and the relative position and length of channel 512 will control the extension of shelf member 112. Again, the brackets with slide rails 168 and 170 are assembled to shelf 112 such that the detent 510 is received in channel 512 prior to mounting the entire assembly in tracks 44.

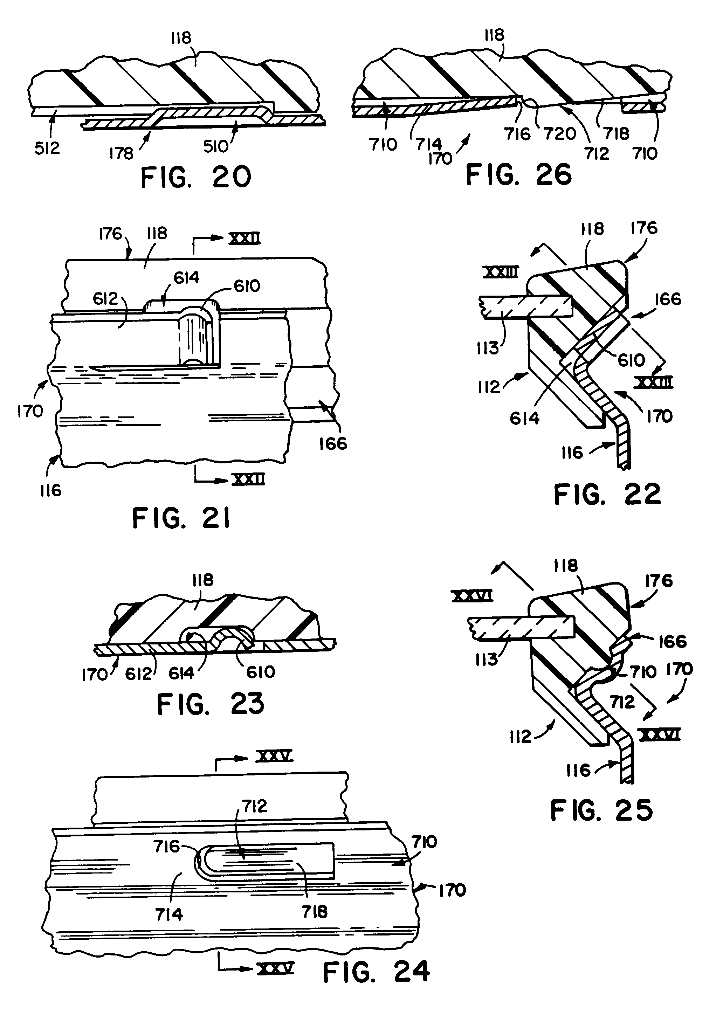

A fifth example of a shelf stop is shown in Figs. 21 to 23. It comprises a detent 610 projecting from the end of a flexible finger 612 formed in at least one of the slide rails 168 or 170 and a notch 614 cut or moulded into the side of the corresponding slide guide 164 and 166. Again, the relative positioning of the detent and notch will determine the extension of the shelf member 112. Also, the shelf member 112 can be removed from the support brackets 114 and 116 by forcing the notch 614 past the resilient detent 610.

A sixth example of a shelf stop is shown in Figs. 24 to 26. Here the shelf stop comprises a groove 710 formed in at least one of slide rails 168 or 170 and a co-operating protrusion 712 formed on the corresponding slide guide 164 and 166. An inclined camming surface 714 with an end wall 716 projecting into the groove 710 is formed over a portion of the length of the groove 710. The protrusion 712 is moulded with a co-operating inclined camming surface 718 and upstanding end wall 720 so that the shelf member 112 can be assembled by sliding the shelf member 112 into the front ends 140 and 142 of support brackets 114 and 116 and forcing the protrusion 712 past the stop wall 716 in the groove. The perimeter rim 118 material of which the protrusion 712 is formed is sufficiently flexible and resilient so that protrusion 712 will deform as its camming surface 718 engages and slides over the camming surface 714 of the rail groove 710. It will resume its undeformed configuration once end wall 720 is past the stop end wall 716. Removal of shelf member 112 should be accomplished by removal of the entire assembly from the tracks 44 followed by removing brackets 114 and 116 from the slide rails 168 and 170.

## Claims

1. A shelf suitable for use in a refrigerated compartment comprising:
a shelf panel (12) having a top surface (46) for receiving and supporting an article set thereupon and having a perimeter edge (22) thereabout;
a rim (18), encapsulating the perimeter edge of the shelf panel;
a support means (14, 16) provided separately from and for supporting the shelf panel; in which the rim is a one-piece member moulded from a mouldable material and forming a liquid tight seal between the shelf panel and the rim, characterised in that the rim is moulded around at least a portion of the support means to secure the shelf panel and the support means together.

2. A shelf as claimed in claim 1 wherein the shelf panel (12) comprises tempered glass and the liquid tight seal is enhanced by the application of a primer layer, such as a heat activatable resinous material, to the shelf panel, between the shelf panel and the rim.

3. A shelf as claimed in claim 1 or 2 wherein the rim projects above the top surface to define a spill dam (48) so that a liquid disposed upon the top surface is contained by the rim and does not flow around the edge of the shelf panel.

4. A shelf as claimed in any of claims 1 to 3 wherein the support means (14, 16) is adapted to support the shelf at a plurality of vertical locations.

5. A shelf as claimed in any of claims 1 to 4 wherein the support means includes at least one bracket (14;16) adapted, in use, to be cantilevered from an upright surface, for example a wall (20) of a refrigerated compartment, the bracket being adapted to be removably secured to the upright surface and the upright surface being adapted to removably receive the bracket.

6. A shelf as claimed in any preceding claim wherein said rim (18) is in situ moulded to secure said shelf panel (12) and said support means (14, 16) together.

7. A shelf as claimed in any of claims 1 to 4 wherein said support means comprises at least a pair of spaced brackets (14, 16) adapted, in use, to be cantilevered from a wall (20) of a refrigerator compartment, and said rim (18) is in situ moulded to secure said shelf panel (12) and said pair of brackets together.

8. A refrigerator or freezer provided with a shelf according to any of claims 1 to 7.

9. A method of assembling a shelf as claimed in any of claims 1 to 7, characterised by making the rim (18) as a one-piece member of mouldable material and forming a liquid tight seal between the shelf panel (12) and the rim by contact between them.

10. A method as claimed in claim 9 characterised by: holding the shelf panel (12) in a mould defining the shape of the rim (18) in position on the shelf panel; injecting a mouldable material into the mould; and allowing the mouldable material to set in the shape of the rim.

11. A method as claimed in claim 9 in which a primer layer is applied to the shelf panel (12) in the region where the rim (18) is formed thereafter.

12. A method as claimed in claim 10 in which the rim is in situ moulded.

## Patentansprüche

1. Regal zur Anwendung in einem Kühlraumfach, umfassend: eine Regalplatte (12) mit einer oberen Fläche (46) zur Aufnahme und Abstützung eines darauf abgesetzten Gegenstandes, welche eine um sie herum verlaufende Umfangskante (22) aufweist; eine Einfassung (18), welche die Umfangskante der Regalplatte umschließt; eine Stützeinrichtung (14, 16), welche getrennt von der Regalplatte und zu deren Abstützung vorgesehen ist, und die Einfassung als einstückiges Teil aus einem gießfähigen Material geformt ist und eine flüssigkeitsdichte Abdichtung zwischen der Regalplatte und der Einfassung bildet, **dadurch gekennzeichnet,** daß die Einfassung um zumindest einen Teil der Stützeinrichtung geformt ist, um die Regalplatte und die Stützeinrichtung miteinander zu verbinden.

2. Regal nach Anspruch 1, **dadurch gekennzeichnet,** daß die Regalplatte (12) aus getempertem Glas besteht und die flüssigkeitsdichte Abdichtung durch die Aufbringung einer Grundierungsschicht, z. B. aus einem durch Wärme aktivierbaren Kunstharzmaterial, auf die Regalplatte, zwischen Regalplatte und Einfassung, verstärkt wird.

3. Regal nach Anspruch 1 oder 2, **dadurch gekennzeichnet,** daß die Einfassung (18) über die obere Fläche hinausragt, um einen Überlaufschutz (48) zu bilden, so daß eine auf die obere Fläche gelaufene Flüssigkeit durch die Einfassung aufgehalten wird und nicht über die Kante der Regalplatte (12) fließt.

4. Regal nach einem oder mehreren der Ansprüche 1 bis 3, **dadurch gekennzeichnet,** daß die Stützeinrichtung (14, 16) so gestaltet ist, daß sie die Regalplatte an einer Vielzahl vertikaler Stellen abstützen kann.

5. Regal nach einem oder mehreren der Ansprüche 1 bis 4, **dadurch gekennzeichnet,** daß die Stützeinrichtung mindestens einen Ausleger (14, 16) umfaßt, der so gestaltet ist, daß er in Funktion freitragend von einer senkrechten Fläche, z. B. einer Wand (20) eines Kühlraumfaches, hervorsteht und abnehmbar an der senkrechten Fläche befestigt ist, und daß die senkrechte Fläche so gestaltet ist, daß sie den Ausleger (14, 16) abnehmbar aufnehmen kann.

6. Regal nach einem oder mehreren der vorhergehenden Ansprüche, **dadurch gekennzeichnet,** daß die Einfassung (18) in situ aufgeformt ist, um die Regalplatte (12) mit der Stützeinrichtung (14, 16) fest zu verbinden.

7. Regal nach einem oder mehreren der Ansprüche 1 bis 4, **dadurch gekennzeichnet,** daß die Stützeinrichtung mindestens ein Paar voneinander beabstandeter Ausleger (14, 16) umfaßt, die so gestaltet sind, daß sie in Funktion freitragend von einer Wand (20) eines Kühlraumfaches hervorstehen, und daß die Einfassung (18) in situ aufgeformt ist, um die Regalplatte (12) und das Paar von Auslegern fest miteinander zu verbinden.

8. Kühl- oder Tiefkühlschrank, **dadurch gekennzeichnet,** daß er mit einem Regal nach einem oder mehreren der Ansprüche 1 bis 7 ausgestattet ist.

9. Verfahren zum Aufbau eines Regals nach einem oder mehreren der Ansprüche 1 bis 7, **gekennzeichnet durch** die Herstellung einer Einfassung (18) als einstückiges Teil aus gießfähigem Material und Bildung einer flüssigkeitsdichten Abdichtung zwischen der Regalplatte (12) und der Einfassung durch Kontakt miteinander.

10. Verfahren nach Anspruch 9, **gekennzeichnet durch** Halten der Regalplatte (12) in einer Form, welche die Gestalt der Einfassung (18) in einer Lage an der Regalplatte bestimmt; Einspritzen eines gießfähigen Materials in die Form und erstarren lassen des gießfähigen Materials in Gestalt der Einfassung.

11. Verfahren nach Anspruch 9, **dadurch gekennzeichnet,** daß eine Grundierungsschicht auf die Regalplatte (12) in dem Bereich aufgebracht wird, an den die Einfassung (18) danach angegossen wird.

12. Verfahren nach Anspruch 10, **dadurch gekennzeichnet,** daß die Einfassung in situ angegossen wird.

## Revendications

1. Étagère convenant pour être utilisée dans un compartiment réfrigéré, comprenant :
• un panneau d'étagère (12), ayant une surface supérieure (46) destinée à recevoir et soutenir un objet placé sur celle-ci, et ayant un bord de périmètre (22) autour de celle-ci ;
• une bordure (18) enfermant le bord de périmètre du panneau d'étagère;
• des moyens de support (14, 16), disposés séparément de, et pour soutenir le panneau d'étagère ; dans laquelle la bordure est un élément en une seule pièce moulé à partir d'une matière pouvant être moulée, et formant un joint étanche aux liquides entre le panneau d'étagère et la bordure, caractérisée en ce que la bordure est moulée autour d'au moins une partie des moyens de support, pour fixer ensemble le panneau d'étagère et les moyens de support.

2. Étagère selon la revendication 1, dans laquelle le panneau d'étagère (12) comprend du verre trempé, et le joint étanche aux liquides est amélioré par l'application d'une couche d'apprêt, telle qu'une matière résineuse pouvant être activée par la chaleur, sur le panneau d'étagère, entre le panneau d'étagère et la bordure.

3. Étagère selon la revendication 1 ou 2, dans laquelle la bordure se projette au-dessus de la surface supérieure, de façon à définir un barrage à l'écoulement (48), tel qu'un liquide disposé sur la surface supérieure soit contenu par la bordure et ne s'écoule pas autour du bord du panneau d'étagère.

4. Étagère selon l'une quelconque des revendications 1 à 3, dans laquelle les moyens de support (14, 16) sont susceptibles de soutenir l'étagère sur une pluralité d'emplacements verticaux.

5. Étagère selon l'une quelconque des revendications 1 à 4, dans laquelle les moyens de support comportent au moins une console (14, 16) susceptible, en utilisation, d'être en porte-à-faux depuis une surface droite, par exemple une paroi (20) d'un compartiment réfrigéré, la console étant susceptible d'être fixée de manière amovible à la surface droite, et la surface droite étant susceptible de recevoir de manière amovible la console.

6. Étagère selon l'une quelconque des revendications précédentes, dans laquelle ladite bordure (18) est moulée in situ pour fixer ensemble ledit panneau d'étagère (12) et lesdits moyens de support (14, 16).

7. Étagère selon l'une quelconque des revendications 1 à 4, dans laquelle lesdits moyens de support comprennent au moins une paire de consoles espacées (14, 16), susceptible, en cours d'utilisation, d'être en porte-à-faux depuis une paroi (20) d'un compartiment de réfrigérateur, et ladite bordure (18) est moulée in situ pour fixer ensemble ledit panneau d'étagère (12) et ladite paire de consoles.

8. Réfrigérateur ou congélateur pourvu d'une étagère selon l'une quelconque des revendications 1 à 7.

9. Procédé de montage d'une étagère selon l'une quelconque des revendications 1 à 7, caractérisé par la fabrication de la bordure en tant qu'élément en une seule pièce de matière pouvant être moulée, et formant un joint étanche au liquide entre le panneau d'étagère (12) et la bordure, par contact entre eux.

10. Procédé selon la revendication 9, caractérisé par le maintien du panneau d'étagère (12) dans un moule définissant la forme de la bordure (18) en position sur le panneau d'étagère ; l'injection d'une matière pouvant être moulée dans le moule ; et l'attente du durcissement de la matière pouvant être moulée, selon la forme de la bordure.

11. Procédé selon la revendication 9, dans lequel une couche d'apprêt est appliquée au panneau d'étagère (12) dans la région où la bordure (18) est formée par la suite.

12. Procédé selon la revendication 10, dans lequel la bordure est moulée in situ.
